# EUROPEAN PATENT SPECIFICATION

(11) **EP 0 569 625 B1**
(45) Date of publication and mention of the grant of the patent: **09.07.1997**
(21) Application number: 92303320.3
(22) Date of filing: 14.04.1992
(51) Int. Cl.: B29C 70/70, B29D 23/00, F16L 47/02, B29L 31/24

(54) **Pipe-fitting and apparatus and method for manufacturing the same**
Rohrmuffe und Apparat und Verfahren zu deren Herstellung
Raccord pour tubes ainsi que dispositif et méthode pour sa fabrication

(43) Date of publication of application: 18.11.1993
(73) Proprietor: Hill 27 S.A., 1118 Luxembourg (LU); EUROSTANDARD S.p.A., 38038 Tesero (TN) (IT)
(72) Inventor: Jones, Gary, West Yorkshire, Halifax HX2 7TS (GB); Cawrey, Paul, Syston, Leicester (GB)
(74) Representative: Sherrard-Smith, Hugh

(56) References cited:
- EP-A- 0 002 799
- EP-A- 0 086 359
- EP-A- 0 119 738
- EP-A- 0 453 208
- AU-A- 537 553
- CH-A- 483 771
- SU-A-1 211 079 (PATON ELECTROWELD IND) & SOVIET INVENTIONS ILLUSTRATED Week 8639, 9 October 1986 Derwent Publications Ltd., London, GB; AN 86-257373/39

## Description

The present invention relates to a pipe-fitting and to apparatus and a method of manufacturing the same.

Pipe-fittings are commonly used to connect the ends of plastic pipes, for example plastic gas supply pipes. Such pipes must be connected by a sealed joint so that, in use, no gas is permitted to escape through the joint.

One known method of making such a sealed joint is to engage the ends of the plastic pipes to be joined in a cylindrical plastic sleeve which sleeve has, embedded in an inner bore-surface thereof, an electrical conductor usually in the form of a helical coil of copper wire. When the ends of the two pipes are in position in the sleeve, an electrical current is passed through the wire causing the wire to become heated, thereby melting the plastics material either on the bore-surface of the sleeve or on the surfaces of the pipes, or both. This causes the ends of the two pipes to become fused or welded to the sleeve in a gas-tight sealed joint.

In a known method for producing such a fitting, a helical groove is made in the inside bore-surface of the sleeve and a length of copper wire is laid in the groove. A disadvantage with sleeves produced by this prior method is that the wire is not securely retained in the groove and may become detached from the surface of the sleeve. This could be a nuisance as, once the wire has become detached from the groove, it is difficult to re-lay it therein and if the helical coil of wire is not uniform throughout the sleeve the effectiveness of the sleeve as a sealed joint can be impaired.

EP 86,359 discloses apparatus for making a pipe-fitting in accordance with the preamble of claim 1 wherein the wire may be at least partially enclosed in such a groove. The apparatus requires the use of components both internal and external to the pipe-fitting in question in order to provide such enclosure.

According to a first aspect of the invention, there is provided apparatus for making a pipe-fitting, of the kind used to connect the ends of pipes, the apparatus comprising cutting means arranged to make a cut in an inside bore-surface of a substantially hollow pipe fitting, wire-laying means arranged to lay a portion of wire in the cut and enclosing means arranged to enclose the wire in the cut, wherein, in use, as the cutting means makes the cut the wire laying means is arranged to lay the wire in the cut and the enclosing means acts on the surface material on one side of the cut to urge the material towards the other side of the cut, the apparatus being characterized in that the enclosing means is arranged to enclose the wire in the cut by relative frictional movement of the enclosing means with respect to the bore surface of the fitting, said relative frictional movement being achieved from the interior of the pipe fitting alone as the wire is being laid.

Preferably, the cutting means are arranged to make a cut which is substantially normal to the inside bore-surface.

Preferably, the cut made by the apparatus comprises a groove.

Preferably, the apparatus includes first guide means arranged to guide the material on one side of the groove as the groove is cut, initially in a direction substantially parallel with the direction of the cut. Preferably, the guide means is arranged to guide the material on one side of the groove in a direction towards the other side of the groove.

The apparatus is preferably arranged to feed the wire into the groove from a location in advance of the cutting means, through the cutting means and into the groove immediately rearwardly of the cutting means.

Preferably, the apparatus is arranged to urge the surface material on one side of the groove to fold towards the other side of the groove.

Preferably, the apparatus is arranged to urge the surface material on one side of the groove to at least partially flow towards the other side of the groove.

Preferably, material on one side of the groove is urged to at least partially flow towards the other side of the groove by contact of the surface material with a friction surface.

According to a second aspect, there is provided a method of making a pipe-fitting for connecting the ends of pipes, the method comprising making a cut in a bore-surface of a fitting, feeding a wire into the cut, and enclosing the wire in the cut, wherein as the cut is made the wire is laid in the cut, and the wire is then enclosed in the cut by urging surface material on one side of the cut towards the other side of the cut, as the wire is being laid, the method being characterised in that enclosure of the wire in the cut is achieved by providing frictional pressure against the bore surface of the fitting, said frictional pressure being achieved from the interior of the pipe-fitting alone.

Preferably, the cut is substantially normal to the inside bore-surface of the body.

Preferably, the method includes cutting a groove in the bore-surface of the fitting.

Preferably, said frictional pressure is provided by bearing against the surface material with a friction surface to urge the material to move towards the other side of the groove.

Preferably, the method includes guiding the surface material in a first direction substantially parallel with the direction of cutting. The method preferably also includes guiding the surface material in a second direction towards the other side of the groove to enclose the wire.

Preferably, the method includes causing the surface material to flow towards the other side of the groove by heat of friction.

The method may include the steps of reaming a bore of the fitting and then cutting the groove and laying the wire immediately thereafter. The method may further comprise cutting the groove and laying the wire whilst heat caused by the reaming of the bore remains in the fitting.

The invention includes a pipe-fitting for use in connecting at least two portions of pipe, the pipe-fitting being produced by a method according to the second aspect. The cut in the fitting preferably comprises a groove.

The material of the pipe-fitting preferably comprises plastics material.

Preferably, the wire is integrally enclosed in the inside bore-surface of the body.

Preferably, the length of wire comprises a coil, arranged to extend coaxially with respect to the bore of the body.

Preferably, wire is enclosed in the groove at least partially by folded surface material from the bore-surface of the body.

Preferably, the wire is enclosed in the groove at least partially by fused surface material from the bore-surface of the body.

An advantage of the wire being integrally enclosed by the plastics material is that it is retained in the bore surface and does not become detached therefrom.

Preferably the wire is enclosed in the groove at least partially by fused surface material from the bore-surface of the body.

The pipe fitting may be an angled fitting such as an L-shaped fitting. The angled pipe-fitting may have at least two lengths of wire, at least one of which is at least partially embedded in one limb of the angled fitting, the other of which being at least partially embedded in the other limb of the angled fitting.

The ends of the length of wire may be arranged to be located substantially in the region of a common end of the fitting.

The apparatus may be arranged to make two substantially parallel cuts in the inside bore-surface of the pipe-fitting, and to lay a portion of wire in each cut.

Preferably as the cutting means makes the cut the wire laying means is arranged to lay a portion of the wire in each cut and surface material on one side of each of the cuts is urged towards the other sides of the cuts to enclose the portions of wire in the cuts as the wire is being laid.

The portions of wire may comprise portions of the same length of wire.

Preferably the cutting means, the wire-laying means and the enclosing means are connected together. The cutting means, the wire-laying means and the enclosing means may be constrained to move together relative to the pipe fitting.

The apparatus preferably includes first guide means arranged to guide the material on one side of the groove as the groove is cut, initially in a direction substantially parallel with the direction of the cut. Alternatively or additionally, the first guide means may be arranged to guide the material on one side of the groove in a direction towards the other side of the groove.

The first guide means may comprise a first channel located adjacent the cutting means and substantially parallel with the direction of the cut. Preferably the first guide means comprise a second channel, located rearwardly of the first channel with respect to the direction of cutting, which second channel is non-parallel to the first channel.

The friction surface preferably extends rearwardly of the first guide means with respect the direction of cutting.

In a preferred arrangement the first guide means are formed in a forward portion of the friction surface with respect to the direction of cutting.

There may be provided second guide means, disposed rearwardly of the cutting means, arranged to guide the wire into the groove cut by the cutting means.

Preferably the second guide means are formed in a forward portion of the friction surface with respect to the direction of the cut.

Preferably the apparatus is arranged to feed the wire into the groove from a location in advance of the cutting means, through the cutting means and into the groove immediately rearwardly of the cutting means.

The angle at which the wire about to be fed into the groove makes with the surface of the bore is preferably shallow.

The cutting means preferably cuts a groove which is substantially normal to the bore-surface of the fitting.

Preferably the cutting means comprises a single cutting facet which is non-perpendicular to the direction of the cut.

The apparatus may be arranged to urge the surface material on one side of the groove to fold towards the other side of the groove.

Preferably the apparatus is arranged to urge the surface material on one side of the groove to at least partially flow towards the other side of the groove.

The surface material on one side of the groove may be urged to at least partially flow towards the other side of the groove by contact of the surface material with the friction surface.

The apparatus may urge surface material on both respective sides of the groove towards the other respective sides of the groove.

The cut made by the cutting means may comprise a groove.

The apparatus may be provided with reaming means arranged to ream a surface of a bore of the fitting.

The reaming means may be constrained to move together with the cutting means, the wire laying means and the enclosing means, relative to the pipe fitting.

The method may include making two substantially parallel cuts in the bore-surface of the fitting and feeding a portion of wire into each cut.

The method may include simultaneously making two cuts in the bore-surface of the fitting and feeding a portion of wire into each of the two cuts.

Preferably as the cuts are made the portions of wire are laid in the cuts and the wire is then enclosed in each cut by urging surface material on one side of each cut towards the other side of that cut, as the wire is being laid.

The method may comprise cutting a groove or grooves in the bore-surface of the fitting.

The method may include laying portions of the same length of wire into the cuts.

The method may include guiding the surface material in a first direction substantially parallel with the direction of cutting. Preferably the method includes guiding the surface material in a second direction towards the other side of the groove to enclose the wire.

The method may comprise causing the surface material to flow towards the other side of the groove by heat of friction.

Preferably the method includes the steps of reaming a bore of the fitting and then cutting the groove and laying the wire immediately thereafter.

In a preferred arrangement the method comprises reaming the bore, cutting the groove and laying the wire using the same apparatus.

The method may comprise cutting the groove and laying the wire whilst heat caused by the reaming of the bore remains in the fitting.

The reaming of the bore, which is performed to ensure a uniform wall-thickness of the pipe-fitting, immediately prior to cutting the groove and laying the wire with the same tool, has the advantage that the surface of the bore is still warm from the reaming and the material is therefore able to be sufficiently heated further, by bearing against the friction surface, to permit the material to flow towards the other side of the groove.

Preferably the method includes the steps of cutting the groove, guiding surface material displaced by the cutting in a first direction substantially parallel with the direction of cutting and then in a second direction towards the other side of the groove and then bearing against the surface material with a friction surface to cause the surface material to at least partially flow towards the other side of the groove.

The method may include urging surface material on both respective sides of the groove towards the other respective sides of the groove.

The cutting means may be arranged to make two substantially parallel cuts in the inside bore-surface of the pipe-fitting, and the wire-laying means may be arranged to lay a portion of wire in each of the two cuts, the enclosing means being arranged to enclose the portions of wire in the cuts by relative movement of the enclosing means with respect to the bore-surface of the fitting.

The wire-laying means may be arranged to lay portions of the same length of wire in the cuts.

The enclosing means may be arranged to enclose the wire in the cut by relative frictional movement of the enclosing means with respect to the bore-surface of the fitting.

The method may include making two substantially parallel cuts in the bore-surface of the fitting, feeding a portion of wire into each cut and enclosing the portions of wire in the cuts by relative movement of enclosing means with respect to the bore-surface of the fitting.

The method may include simultaneously making two cuts in the bore-surface of the fitting, and feeding a portion of wire into each cut.

The method may include feeding portions of the same length of wire into the cuts.

The method may include enclosing the wire in the cut by relative frictional movement of the enclosing means with respect to the bore-surface of the fitting.

The invention also includes any combination of the herein described features and limitations.

An embodiment of the present invention will now be described by way of example with reference to the accompany diagrammatic drawings in which:
Figure 1 shows a pipe fitting according to an embodiment of the invention,
Figure 2 is a cross-sectional view of an inside bore-surface of the pipe-fitting of Figure 1,
Figure 3 is a side view of an embodiment of wire-laying apparatus according to the invention,
Figure 4 is a plan view of the apparatus of Figure 3,
Figure 5 is an end view of the apparatus of Figure 3,
Figure 6 is a more detailed view of a friction surface of the apparatus of Figure 3,
Figure 7 is an end view of a cutting tool of the apparatus of Figure 3,
Figure 8 is a view from above of the cutting tool of Figure 7,
Figure 9 is a view from below over the cutting tool of Figure 7, and
Figure 10 shows the apparatus of Figure 3 in relation to the pipe-fitting of Figure 1.

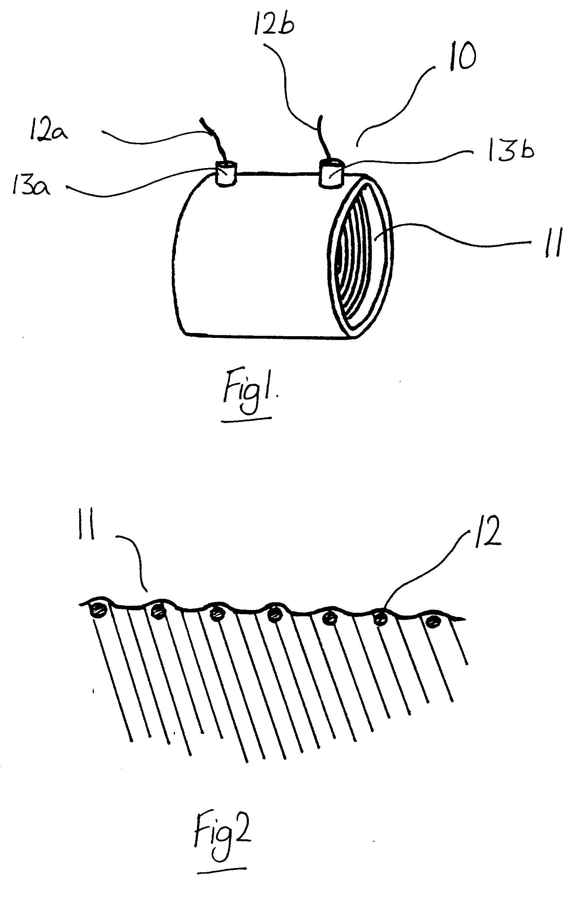

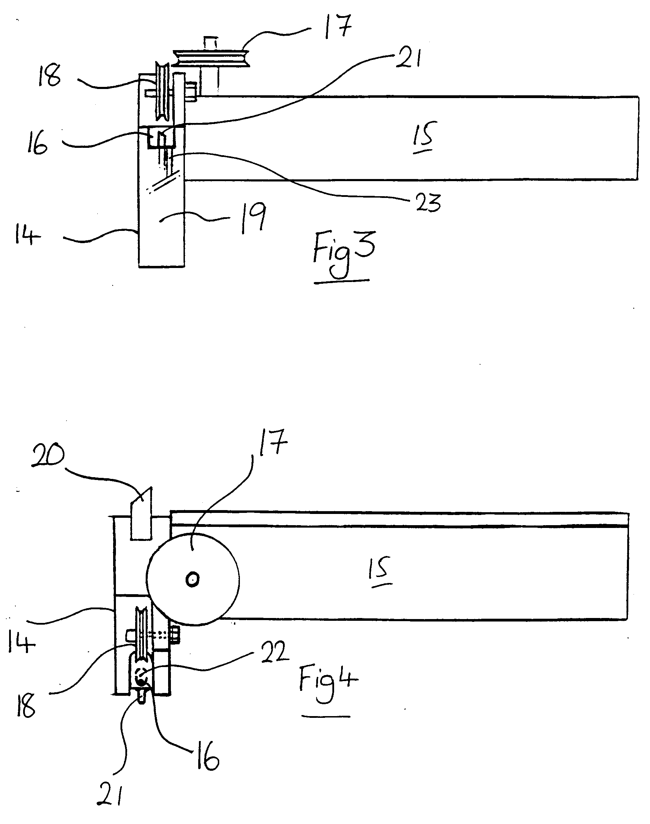

Referring particularly to Figure 1, this shows a plastic pipe-fitting 10 of the kind used to connect the ends of pipes (not shown) such as gas pipes. The fitting 10 is hollow and generally cylindrical and has an inner bore-surface 11. Embedded in the bore-surface 11 is a helical coil of copper wire 12 (shown more clearly in Figure 2), a first end 12a of which protrudes from a first port 13a on the exterior of the fitting 10 and the second end 12b of which protrudes from a second port 13b on the exterior of the fitting 10.

Referring also now to Figure 2, this shows, in cross-section, a portion of the bore-surface 11 of the fitting 10 with the helical coil of copper wire 12 embedded therein. The turns of the wire 12 are enclosed by the plastics material of the bore-surface 11 causing the bore-surface 11 to undulate. The wire is securely retained in the bore-surface 11 and is not prone to becoming detached, as has been the case with prior fittings of this kind.

In use, when the fitting is required to connect two plastic pipes (not shown) the ends of the pipes are each inserted in the respective ends of the fitting 10. The diameter of the bore of the fitting 10 is chosen so as to be a friction fit with the pipes which it is to connect. Once the pipes are in position an electrical current is made to flow through the copper wire 12 by appropriately connecting the ends 12a, 12b of the coil to a voltage source. The passage of electrical current through the wire 12 causes the wire to become heated which heat causes the plastic material surrounding the wire 12 to melt. In addition, the heat of the wire at least partially melts the outer surfaces of the pipes. After a predetermined time the current flow in the wire 12 is stopped and the pipes and the fitting are allowed to cool. The result is a welding together of each pipe to the fitting 10 to produce a relatively strong joint. Importantly the joint is a gas-impermeable seal and so the fitting 10 can be used to sealably connect gas pipes.

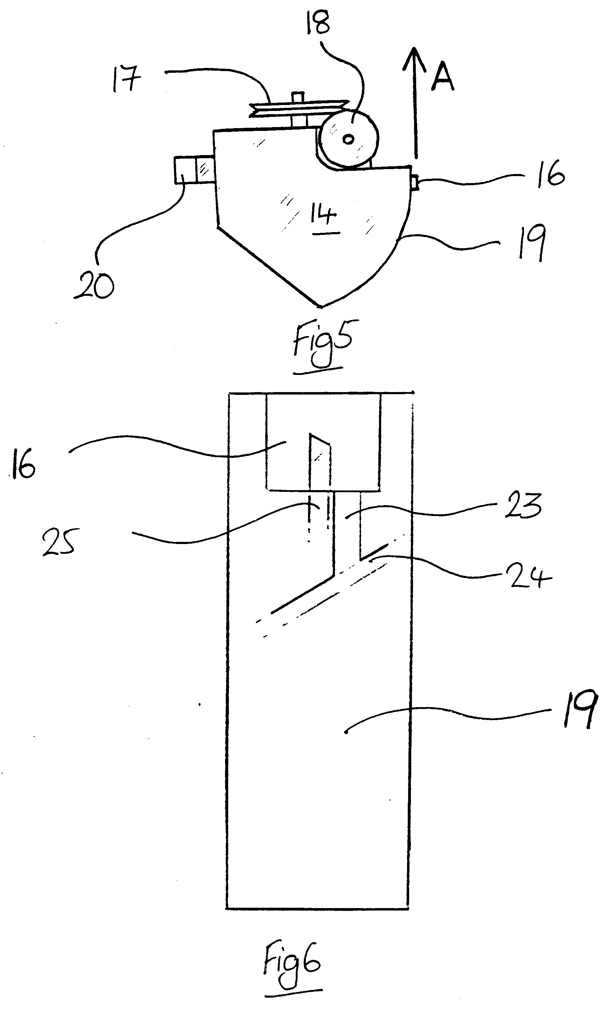

Turning now to Figures 3 to 5, these show apparatus for laying the wire 12 in a fitting 10 (shown in Figures 1 and 2).

The wire-laying apparatus comprises a steel head portion 14, and a steel support arm 15 which is connected to and supports the head portion 14.

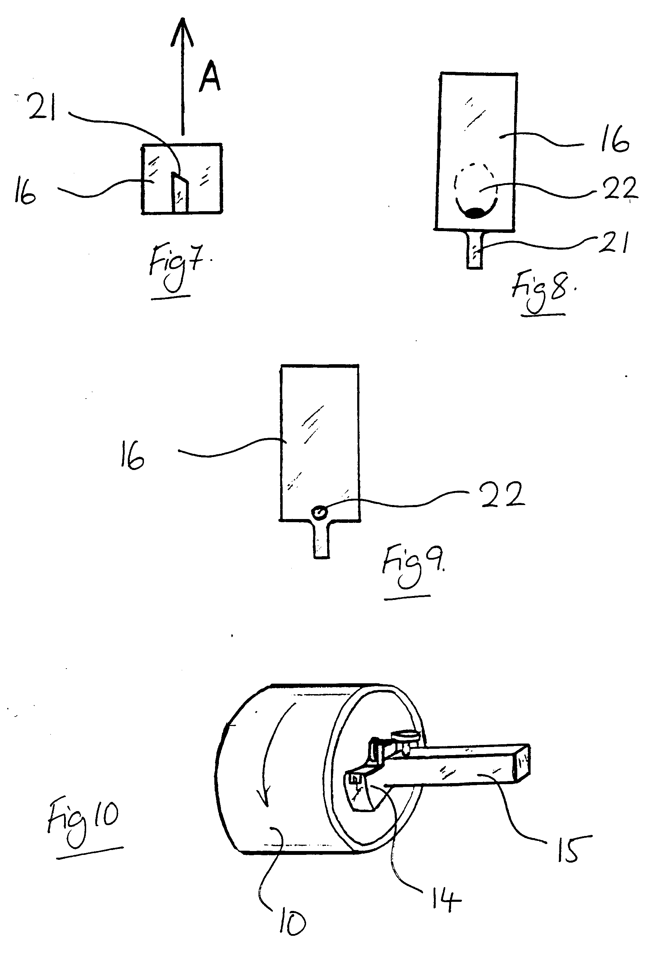

Mounted on the head portion 14 is a first cutter 16 (shown in more detail in Figures 7 to 9) and first and second guide pulleys 17 and 18 which guide the copper wire (not shown) during the wire-laying process. The head portion 14 has an arcuate friction surface 19 (shown in more detail in Figure 6) which has been flame-hardened and polished. In addition, a second cutter 20 is mounted on the head portion 14 on the opposite of the head portion 14 to that on which the first cutter 16 is mounted.

In use, a hollow, cylindrical plastic fitting (such as 10 in Figure 1) is mounted on the spindle of a computer-numerically-controlled (CNC) machine (not shown) and the support arm 15 of the wire laying apparatus is mounted in the tool-holder of the machine.

The CNC machine is programmed to rotate the fitting 10 at a first fixed speed, typically 2000 revolutions per minute, and to advance the wire-laying apparatus into the bore of the fitting 10 without initially making contact with the fitting 10.

Once the wire-laying apparatus is positioned fully inside the rotating fitting 10, at the end at which the fitting is secured to the spindle, the wire-laying apparatus is manoeuvred so that the second cutting means 20 is made to cut into the inside bore-surface of the fitting, to a predetermined depth, and the wire-laying apparatus is slowly withdrawn from inside the bore of the fitting as a predetermined rate, maintaining the cutting of the bore-surface at the predetermined depth, to perform a reaming operation. This ensures that the bore-surface is consistently even and is completely cylindrical for the wire-laying operation.

Once the head portion 14 is fully withdrawn and any swarf or waste material has been removed, the CNC machine causes the head portion 14 to re-enter the bore of the fitting 10 to the position it occupied at the start of the reaming process.

The wire-laying operation will now be described in detail with reference to Figures 3 to 5 which show the wire-laying apparatus, Figure 6 which shows in more detail the arcuate friction surface 19 of the head portion 14 and Figures 7 to 9 which show in more detail the first cutter 16 of the wire-laying apparatus.

For the wire-laying process the CNC machine causes the fitting 10 to rotate at approximately 50 revolutions per minute and the first cutter 16 is then brought into contact with the bore-surface 11 (shown in Figures 1 and 2) to cut a groove therein. The groove is substantially normal to the bore-surface 11 of the fitting 10. The direction of relative movement of the stationary cutter 16 with respect to the rotating bore-surface 11 is represented by arrow A in Figures 5 and 7.

The cutter 16 has a single cutting facet 21 which is at an angle of approximately 70° to the direction of cutting. In addition the cutter 16 has a hole 22 which passes through the cutter 16 from the front of the cutter 16 (shown in Figures 4 and 8) to the back of the cutter 16 (shown in Figure 9) and which is wider at the front than at the back. The purpose of this hole is to receive the copper wire (not shown) from the guide pulleys 17 and 18 and to allow the wire to pass through the cutter 16 to a position rearwardly of the cutter 16 with respect to the direction of cutting (A).

As the cutting facet 21 of the cutter 16 cuts a groove in the rotating bore-surface 11 of the fitting 10 a flange (not shown) of plastic material is displaced to one side of the cutter 16. This flange is guided by a first guide channel 23 on the friction surface 19 of the head portion 14 (shown in detail in Figure 6) which first guide channel 23 is substantially parallel to the direction of cutting (A).

After the flange of displaced plastic material has been guided by the first guide channel 23 in a direction substantially parallel to the direction of cutting, the flange meets a second guide channel 24 which extends across the friction surface 19 at an angle of approximately 45° to the first channel 23. The action of the second channel 24 is to urge the flange towards the opposite side of the freshly cut groove. Before this happens the wire (not shown) is fed through the hole 23 in the first cutter 16 to appear in a third guide channel 25 which guides the wire into the freshly cut groove.

As soon as the wire is laid into the cut groove the flange of displaced material is urged by the channel 24 towards the other side of the groove to thereby at least partly cover the laid wire. The surface 19 then presses against the displaced material causing it to become heated due to friction. The result is that the displaced material is made to deform and enclose the wire in the cut groove.

As the head portion 14 is withdrawn from the bore of the rotating fitting 10 at a predetermined speed by the CNC machine, the wire becomes laid in the form of a helical coil embedded in a helical groove in the bore-surface 11 of the fitting 10 (see Figure 2)

The reaming of the bore-surface 11, immediately prior to the wire-laying operation, provides the benefit that the bore-surface is still warm from friction caused by the reaming (second) cutter 20 when the wire-laying process begins. This assists the further frictional heating of the bore-surface 11 by the friction surface 19 as it causes the displaced plastic material to flow over the wire, thereby embedding the wire in the freshly cut groove.

The continuous process of the wire-laying therefore involves the temporary opening of a groove, the laying of wire in the groove, and the immediate enclosing of the wire in the groove.

Further revolutions of the fitting 10 cause the friction surface 19 to bear against regions of the bore-surface 11 which have been laid with wire on previous revolutions. In practice the friction surface 19 typically bears against an enclosed portion of wire periodically for approximately five revolutions until the head portion 14 has been completely withdrawn past that portion of wire. This repeated contact assists in the embedding and enclosing of the wire in the bore-surface 11.

Figure 10 shows the wire laying apparatus approaching the revolving fitting 10.

It will be appreciated that modifications may be made to the above apparatus and method without departing from the scope of the invention. For example a CNC machine need not be used to operate the wire-laying apparatus, although it has been found convenient to do so.

In addition, the laying of the wire could begin at the end of the fitting 10 furthest from the spindle of the machine, with the head portion 14 gradually progressing into the bore of the fitting 10.

When an angled or "elbow" fitting (not shown) is required, for example to join two pipes at an angle, it is convenient to use two coils of wire, one embedded in each limb of the elbow. To achieve this the apparatus uses two sets of cutting and wire-laying apparatus arranged side by side (not shown), and makes two parallel helical cuts in a first limb and lays a portion of wire in each cut. The procedure is then repeated for the other limb.

The portions of wire in each of the respective limbs are of the same length of wire which has been folded into two, with the two loose ends of the wire being conveniently arranged to emerge from the same end of the fitting. This provides a double coil in each limb, with each double coil being a single length of wire. Each length can then be made to conduct a current to seal a pipe into each end of the elbow fitting.

The reader's attention is directed to all papers and documents which are filed concurrently with or previous to this specification in connection with this application and which are open to public inspection with this specification, and the contents of all such papers and documents are incorporated herein by reference.

All of the features disclosed in this specification (including any accompanying claims, abstract and drawings), and/or all of the steps of any method or process so disclosed, may be combined in any combination, except combinations where at least some of such features and/or steps are mutually exclusive.

Each feature disclosed in this specification (including any accompanying claims, abstract and drawings), may be replaced by alternative features serving the same, equivalent or similar purpose, unless expressly stated otherwise. Thus, unless expressly stated otherwise, each feature disclosed is one example only of a generic series of equivalent or similar features.

The invention is not restricted to the details of the foregoing embodiment(s). The invention extends to any novel one, or any novel combination, of the features disclosed in this specification (including any accompanying claims, abstract and drawings), or to any novel one, or any novel combination, of the steps of any method or process so disclosed.

## Claims

1. Apparatus for making a pipe-fitting (10), of the kind used to connect the ends of pipes, the apparatus comprising cutting means (16) arranged to make a cut in an inside bore-surface (11) of a substantially hollow pipe fitting, wire-laying means (17, 18, 22, 25) arranged to lay a portion of wire (12) in the cut and enclosing means (19, 24) arranged to enclose the wire in the cut, wherein, in use, as the cutting means (16) makes the cut the wire laying means (17, 18, 22, 25) is arranged to lay the wire (12) in the cut and the enclosing means (19, 24) acts on the surface material on one side of the cut to urge the material towards the other side of the cut, the apparatus being characterized in that the enclosing means (19, 24) is arranged to enclose the wire (12) in the cut by relative frictional movement of the enclosing means (19, 24) with respect to the bore surface (11) of the fitting (10), said relative frictional movement being achieved from the interior of the pipe fitting alone as the wire is being laid.

2. Apparatus according to claim 1 wherein the cutting means (16) are arranged to make a cut which is substantially normal to the inside bore-surface (11).

3. Apparatus according to claim 1 or 2 wherein the cut made by the apparatus comprises a groove.

4. Apparatus according to claim 1, 2 or 3 including first guide means (23, 24) arranged to guide the material on one side of the groove as the groove is cut, initially in a direction substantially parallel with the direction of the cut.

5. Apparatus according to claim 4 wherein the guide means (23, 24) is arranged to guide the material on one side of the groove in a direction towards the other side of the groove.

6. Apparatus according to any of the preceding claims, wherein the apparatus is arranged to feed the wire (12) into the groove from a location in advance of the cutting means (16), through the cutting means (16) and into the groove immediately rearwardly of the cutting means (16).

7. Apparatus according to any of the preceding claims, wherein the apparatus is arranged to urge the surface material on one side of the groove to fold towards the other side of the groove.

8. Apparatus according to any of the preceding claims, wherein the apparatus is arranged to urge the surface material on one side of the groove to at least partially flow towards the other side of the groove.

9. Apparatus according to claim 8 wherein the surface material on one side of the groove is urged to at least partially flow towards the other side of the groove by contact of the surface material with a friction surface.

10. A method of making a pipe-fitting for connecting the ends of pipes, the method comprising making a cut in a bore-surface (11) of a fitting (10), feeding a wire (12) into the cut, and enclosing the wire (12) in the cut, wherein as the cut is made the wire (12) is laid in the cut, and the wire (12) is then enclosed in the cut by urging surface material on one side of the cut towards the other side of the cut, as the wire is being laid, the method being characterised in that enclosure of the wire (12) in the cut is achieved by providing frictional pressure against the bore surface (11) of the fitting (10), said frictional pressure being achieved from the interior of the pipe-fitting (10) alone.

11. A method according to claim 10 wherein the cut is substantially normal to the inside bore-surface (11) of the body.

12. A method according to claim 10 or 11 comprising cutting a groove in the bore-surface (11) of the fitting (10).

13. A method according to claim 10, 11 or 12, wherein said frictional pressure is provided by bearing against the surface material with a friction surface (19) to urge the material to move towards the other side of the groove.

14. A method according to claim 10, including guiding the surface material in a first direction substantially parallel with the direction of cutting.

15. A method according to claim 14, including guiding the surface material in a second direction towards the other side of the groove to enclose the wire.

16. A method according to claim 10 comprising causing the surface material to flow towards the other side of the groove by heat of friction.

17. A method according to claim 10 including the steps of reaming a bore of the fitting and then cutting the groove and laying the wire immediately thereafter.

18. A method according to claim 17 comprising cutting the groove and laying the wire (12) whilst heat caused by the reaming of the bore remains in the fitting.

19. A pipe-fitting (10) for use in connecting at least two portions of pipe, the pipe-fitting being produced by a method according to claim 10.

20. A pipe fitting according to claim 19 wherein the cut comprises a groove.

21. A pipe fitting according to claim 19 wherein the material of the pipe-fitting comprises plastics material.

22. A pipe fitting according to claim 19, wherein the wire (22) is integrally enclosed in the inside bore-surface (11) of the body.

23. A pipe fitting according to claim 19, wherein the length of wire (12) comprises a coil, arranged to extend coaxially with respect to the bore of the body.

24. A pipe fitting according to claim 19, wherein the wire (12) is enclosed in the groove at least partially by folded surface material from the bore-surface of the body.

25. A pipe fitting according to claim 19 wherein the wire (12) is enclosed in the groove at least partially by fused surface material from the bore-surface (11) of the body.

## Patentansprüche

1. Vorrichtung zum Herstellen eines Rohrformstücks (100) des Typs, der zum Verbinden der Enden von Rohren eingesetzt wird, wobei die Vorrichtung eine Schneideeinrichtung (16), die einen Schnitt in einer Bohrungsinnenfläche (11) eines im wesentlichen hohlen Rohrformstücks herstellt, eine Drahtverlegeeinrichtung (17, 18, 22, 25), die einen Drahtabschnitt (12) in dem Schnitt verlegt, sowie eine Drahteinschließeinrichtung (19, 24), die den Draht in dem Schnitt einschließt, umfaßt, wobei in Funktion, wenn die Schneideeinrichtung (16) den Schnitt ausführt, die Drahtverlegeeinrichtung (17, 18, 22, 25) den Draht (12) in dem Schnitt verlegt und die Einschließeinrichtung (19, 24) auf das Oberflächenmaterial auf einer Seite des Schnitts einwirkt und das Material auf die andere Seite des Schnitts zu drückt, wobei die Vorrichtung **dadurch gekennzeichnet** ist, daß die Einschließeinrichtung (19, 24) den Draht (12) in dem Schnitt durch die Reibungsbewegung der Einschließeinrichtung (19, 24) in bezug auf die Bohrungsfläche (11) des Formstücks einschließt, wobei die relative Reibungsbewegung allein aus dem Inneren des Rohrformstücks beim Verlegen des Drahtes erzeugt wird.

2. Vorrichtung nach Anspruch 1, wobei die Schneideinrichtung (16) einen Schnitt herstellt, der im wesentlichen senkrecht zu der Bohrungsinnenfläche (11) ist.

3. Vorrichtung nach Anspruch 1 oder 2, wobei der Schnitt, der von der Vorrichtung hergestellt wird, eine Nut umfaßt.

4. Vorrichtung nach Anspruch 1, 2 oder 3, die eine erste Leiteinrichtung (23, 24) enthält, die, wenn die Nut geschnitten wird, das Material auf einer Seite der Nut zunächst in einer Richtung im wesentlichen parallel zur Richtung des Schnittes leitet.

5. Vorrichtung nach Anspruch 4, wobei die Leiteinrichtung (23, 24) das Material auf einer Seite der Nut in einer Richtung auf die andere Seite der Nut zu leitet.

6. Vorrichtung nach einem der vorangehenden Ansprüche, wobei die Vorrichtung den Draht (12) von einer Position vor der Schneideinrichtung (16) in die Nut über die Schneideinrichtung (16) und in die Nut unmittelbar hinter der Schneideinrichtung (16) einleitet.

7. Vorrichtung nach einem der vorangehenden Ansprüche, wobei die Vorrichtung das Oberflächenmaterial auf einer Seite der Nut so drückt, daß es auf die andere Seite der Nut zu gefaltet wird.

8. Vorrichtung nach einem der vorangehenden Ansprüche, wobei die Vorrichtung das Oberflächenmaterial auf einer Seite der Nut so drückt, daß es wenigstens teilweise auf die andere Seite der Nut zu fließt.

9. Vorrichtung nach Anspruch 8, wobei das Oberflächenmaterial auf einer Seite der Nut durch den Kontakt des Oberflächenmaterials mit einer Reibfläche so gedrückt wird, daß es wenigstens teilweise auf die andere Seite der Nut zu fließt.

10. Verfahren zum Herstellen eines Rohrformstücks zum Verbinden der Enden von Rohren, wobei das Verfahren das Herstellen eines Schnitts in einer Bohrungsfläche (11) eines Formstücks (10), das Einleiten eines Drahtes (12) in den Schnitt und das Einschließen des Drahtes (12) in dem Schnitt umfaßt, wobei, wenn der Schnitt hergestellt wird, der Draht (12) in dem Schnitt verlegt wird und der Draht (12) anschließend in dem Schnitt eingeschlossen wird, indem Oberflächenmaterial auf einer Seite des Schnittes auf die andere Seite des Schnittes zu gedrückt wird, wenn der Draht verlegt wird, wobei das Verfahren **dadurch gekennzeichnet** ist, daß das Einschließen des Drahtes (12) in dem Schnitt bewirkt wird, indem Reibungsdruck auf die Bohrungsfläche (11) des Formstücks (10) ausgeübt wird, wobei der Reibungsdruck allein aus dem Inneren des Rohrformstücks (10) erzeugt wird.

11. Verfahren nach Anspruch 10, wobei der Schnitt im wesentlichen senkrecht zu der Bohrungsinnenfläche (11) des Körpers ist.

12. Verfahren nach Anspruch 10 oder 11, das das Schneiden einer Nut in der Bohrungsfläche (11) des Formstücks (10) umfaßt.

13. Verfahren nach Anspruch 10, 11 oder 12, wobei der Reibungsdruck erzeugt wird, indem mit einer Reibungsfläche (19) auf das Oberflächenmaterial gedrückt wird, um das Material durch Druck auf die andere Seite der Nut zu zu bewegen.

14. Verfahren nach Anspruch 10, das das Leiten des Oberflächenmaterials in einer ersten Richtung im wesentlichen parallel zur Richtung des Schneidens einschließt.

15. Verfahren nach Anspruch 14, das das Leiten des Oberflächenmaterials in einer zweiten Richtung auf die andere Seite der Nut zu einschließt, um den Draht einzuschließen.

16. Verfahren nach Anspruch 10, das das In-Fluß-Bringen des Oberflächenmaterials auf die andere Seite der Nut zu durch Reibungswärme umfaßt.

17. Verfahren nach Anspruch 10, das die Schritte des Reibens einer Bohrung des Formstücks und des anschließenden Schneidens der Nut und des unmittelbar darauffolgenden Verlegens des Drahtes einschließt.

18. Verfahren nach Anspruch 17, das das Schneiden der Nut und das Verlegen des Drahtes (12) beim Verbleiben der durch das Reiben der Bohrung erzeugten Wärme in dem Formstück umfaßt.

19. Rohrformstück (10) zum Einsatz beim Verbinden wenigstens zweier Rohrabschnitte, wobei das Rohrformstück mit einem Verfahren nach Anspruch 10 hergestellt wird.

20. Rohrformstück nach Anspruch 19, wobei der Schnitt eine Nut umfaßt.

21. Rohrformstück nach Anspruch 19, wobei das Material des Rohrformstücks Kunststoffmaterial umfaßt.

22. Rohrformstück nach Anspruch 19, wobei der Draht (22) integral in der Bohrungsinnenfläche (11) des Körpers eingeschlossen ist.

23. Rohrformstück nach Anspruch 19, wobei der Drahtabschnitt (12) eine Spirale umfaßt, die sich koaxial zu der Bohrung des Körpers erstreckt.

24. Rohrformstück nach Anspruch 19, wobei der Draht (12) in der Nut wenigstens teilweise durch gefaltetes Oberflächenmaterial von der Bohrungsfläche des Körpers eingeschlossen wird.

25. Rohrformstück nach Anspruch 19, wobei der Draht (12) in der Nut wenigstens teilweise durch geschmolzenes Oberflächenmaterial von der Bohrungsfläche (11) des Körpers eingeschlossen wird.

## Revendications

1. Dispositif pour la fabrication d'un raccord de tuyaux (10), du type servant à relier les extrémités de tuyaux, le dispositif comprenant un moyen de coupe (16) conçu pour réaliser une entaille dans une surface interne (11) de l'alésage d'un raccord de tuyaux sensiblement creux, des moyens de pose de fil métallique (17, 18, 22, 25) conçus pour poser un tronçon de fil métallique (12) dans l'entaille, et des moyens d'enfermement (19, 24) conçus pour enfermer le fil métallique dans l'entaille, dans lequel, en service, lorsque le moyen de coupe (16) réalise l'entaille, les moyens de pose de fil métallique (17, 18, 22, 25) sont conçus pour poser le fil métallique (12) dans l'entaille et les moyens d'enfermement (19, 24) agissent sur le matériau de surface situé d'un côté de l'entaille afin de le pousser vers l'autre côté de l'entaille, le dispositif étant caractérisé en ce que les moyens d'enfermement (19, 24) sont conçus pour enfermer le fil métallique (12) dans l'entaille, par un mouvement de frottement relatif des moyens d'enfermement (19, 24) par rapport à la surface (11) de l'alésage du raccord (10), ledit mouvement de frottement relatif étant exécuté depuis l'intérieur du seul raccord de tuyaux au moment de la pose du fil métallique.

2. Dispositif selon la revendication 1, dans lequel le moyen de coupe (16) est conçu pour réaliser une entaille qui est sensiblement normale à la surface interne (11) de l'alésage.

3. Dispositif selon la revendication 1 ou 2, dans lequel l'entaille réalisée par le dispositif comprend une rainure.

4. Dispositif selon la revendication 1, 2 ou 3, comprenant des premiers moyens de guidage (23, 24) conçus pour guider le matériau situé d'un côté de la rainure, pendant que celle-ci est réalisée, initialement dans une direction sensiblement parallèle à la direction de l'entaille.

5. Dispositif selon la revendication 4, dans lequel les moyens de guidage (23, 24) sont conçus pour guider le matériau situé d'un côté de la rainure, dans une direction orientée vers l'autre côté de la rainure.

6. Dispositif selon l'une quelconque des revendications précédentes, dans lequel le dispositif est conçu pour amener le fil métallique (12) à l'intérieur de la rainure à partir d'un emplacement situé en avant du moyen de coupe (16), en passant par celui-ci pour arriver dans la rainure, immédiatement en arrière du moyen de coupe (16).

7. Dispositif selon l'une quelconque des revendications précédentes, dans lequel le dispositif est conçu pour pousser le matériau de surface situé d'un côté de la rainure afin de le rabattre vers l'autre côté de la rainure.

8. Dispositif selon l'une quelconque des revendications précédentes, dans lequel le dispositif est conçu pour pousser le matériau de surface situé d'un côté de la rainure afin qu'il flue au moins partiellement vers l'autre côté de la rainure.

9. Dispositif selon la revendication 8, dans lequel le matériau de surface situé d'un côté de la rainure est poussé afin qu'il flue au moins partiellement vers l'autre côté de la rainure, par contact du matériau de surface avec une surface de frottement.

10. Procédé de fabrication d'un raccord de tuyaux servant à relier les extrémités de tuyaux, le procédé comprenant la réalisation d'une entaille dans une surface (11) de l'alésage d'un raccord (10), l'amenée d'un fil métallique (12) dans l'entaille, et l'enfermement du fil métallique (12) dans celle-ci, dans lequel le fil métallique (12) est posé dans l'entaille au fur et à mesure que celle-ci est réalisée, puis enfermé dans l'entaille par poussée d'un matériau de surface situé d'un côté de l'entaille vers l'autre côté de celle-ci, pendant la pose du fil métallique, le procédé étant caractérisé en ce que l'enfermement du fil métallique (12) dans l'entaille est réalisé par une pression de frottement exercée contre la surface (11) de l'alésage du raccord (10), ladite pression de frottement étant exercée depuis l'intérieur du seul raccord de tuyaux (10).

11. Procédé selon la revendication 10, dans lequel l'entaille est sensiblement normale à la surface interne (11) de l'alésage du corps.

12. Procédé selon la revendication 10 ou 11, comprenant la réalisation d'une rainure dans la surface (11) de l'alésage du raccord (10).

13. Procédé selon la revendication 10, 11 ou 12, dans lequel on produit ladite pression de frottement en appuyant contre le matériau de surface avec une surface de frottement (19) pour obliger le matériau à se déplacer vers l'autre côté de la rainure.

14. Procédé selon la revendication 10, comprenant le guidage du matériau de surface dans une première direction sensiblement parallèle à la direction de coupe.

15. Procédé selon la revendication 14, comprenant le guidage du matériau de surface dans une seconde direction, vers l'autre côté de la rainure, afin d'enfermer le fil métallique.

16. Procédé selon la revendication 10, comprenant l'étape consistant à obliger le matériau de surface à fluer vers l'autre côté de la rainure sous l'effet de la chaleur de frottement.

17. Procédé selon la revendication 10, comprenant les étapes consistant à aléser un alésage du raccord, puis à réaliser la rainure et à poser le fil métallique immédiatement après.

18. Procédé selon la revendication 17, comprenant la réalisation de la rainure et la pose du fil métallique (12), tandis que la chaleur produite par l'usinage de l'alésage demeure dans le raccord.

19. Raccord de tuyaux (10) destiné à être utilisé pour relier au moins deux tronçons de tuyau, le raccord de tuyaux étant fabriqué par un procédé selon la revendication 10.

20. Raccord de tuyaux selon la revendication 19, dans lequel l'entaille comprend une rainure.

21. Raccord de tuyaux selon la revendication 19, dans lequel le matériau du raccord de tuyaux comprend une matière plastique.

22. Raccord de tuyaux selon la revendication 19, dans lequel le fil métallique (22) est entièrement enfermé dans la surface interne (11) de l'alésage du corps.

23. Raccord de tuyaux selon la revendication 19, dans lequel le longueur de fil métallique (12) comprend un enroulement conçu pour s'étendre coaxialement par rapport à l'alésage du corps.

24. Raccord de tuyaux selon la revendication 19, dans lequel le fil métallique (12) est enfermé dans la rainure au moins en partie par du matériau de surface rabattu provenant de la surface de l'alésage du corps.

25. Raccord de tuyaux selon la revendication 19, dans lequel le fil métallique (12) est enfermé dans la rainure au moins en partie par du matériau de surface fondu provenant de la surface (11) de l'alésage du corps.
